(19) Europäisches Patentamt
European Patent Office
Office européen des brevets

(11) **EP 3 506 579 A1**

(12) **EUROPEAN PATENT APPLICATION**

(43) Date of publication:
**03.07.2019 Bulletin 2019/27**

(51) Int Cl.:
*H04L 25/02* (2006.01)          *H04L 25/03* (2006.01)

(21) Application number: **18214988.0**

(22) Date of filing: **20.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2017 JP 2017249362**

(71) Applicant: **Renesas Electronics Corporation 135-0061 Tokyo (JP)**

(72) Inventors:
• **SATO, Takahiro**
  **Tokyo, 135-0061 (JP)**
• **MATSUI, Naohiro**
  **Tokyo, 135-0061 (JP)**

(74) Representative: **Betten & Resch Patent- und Rechtsanwälte PartGmbB Maximiliansplatz 14 80333 München (DE)**

(54) **RECEIVING DEVICE, EQUALIZATION PROCESSING PROGRAM, AND SIGNAL RECEIVING METHOD**

(57)     To overcome a problem of a conventional receiving device that it is not possible to suppress an influence of noise overlapped on a received signal, a receiving device according to an embodiment performs, in an equalization processing circuit that performs an equalizing process for a received signal sequence and outputs a sequence to be demodulated, a first transmission-path estimating process of generating a first compensation coefficient indicating a propagation coefficient of a transmission path of a received signal, based on a preamble sequence, a second transmission-path estimating process of generating a second compensation coefficient from a received header-replica sequence generated by performing demodulation and modulation for a header sequence included in a first equalizer-compensated output sequence in which distortion has been compensated based on the first compensation coefficient, a third transmission-path estimating process of generating a third compensation coefficient by synthesizing the first and second compensation coefficients with each other, and a propagation-path compensating process of performing a distortion compensating process for a payload sequence included in the received signal sequence based on the third compensation coefficient.

*FIG. 1*

EXPLANATORY DIAGRAM OF INFLUENCE OF NOISE ON TRANSMISSION PATH

SIMPLE BLOCK DIAGRAM OF RECEIVING CIRCUIT

EXPLANATORY DIAGRAM OF FRAME FORMAT OF RECEIVED SIGNAL

EP 3 506 579 A1

**Description**

CROSS-REFERENCE TO RELATED APPLICATIONS

The disclosure of Japanese Patent Application No. 2017-249362 filed on December 26, 2017 including the specification, drawings and abstract is incorporated herein by reference in its entirety.

BACKGROUND

The present invention relates to a receiving device, an equalization processing program, and a signal receiving method, and more particularly relates to a receiving device, an equalization processing program, and a signal receiving method that perform an equalizing process that compensates distortion generated in a propagation path and reduces noise for a received signal, for example.

In recent years, a transmission speed is being improved in communication standards in a radio communication system in which a mobile phone, a smart meter, or the like is coupled. However, characteristics of a signal transmission path are deteriorated because of a situation of the transmission path, for example, radio-wave interference or a multipath. This deterioration prevents improvement of the transmission speed in an actual use state. Further, there is noise such as thermal noise or another radio signal on a transmission path. This noise causes deterioration of signal quality, which in turn prevents improvement of the transmission speed. Therefore, a technique for compensating signal distortion generated in a transmission path is disclosed in Japanese Patent No. 3794622.

A receiving device described in Japanese Patent No. 3794622 includes a receiving unit, an estimating unit, a compensating unit, a demodulating unit, and a modulating unit. The receiving unit receives a result of transmission of a transmitted signal that is obtained by modulating a known signal and a data signal in a predetermined modulation method, and outputs the result as a received signal. The estimating unit estimates transmission-path characteristics. The compensating unit compensates a portion of the received signal, which corresponds to the data signal and has not been compensated yet, with an already-estimated portion of the transmission-path characteristics and outputs a compensation result as a compensated data signal. The demodulating unit demodulates the compensated data signal and outputs a demodulation result as a demodulated data signal. The modulating unit modulates the demodulated data signal in the predetermined modulation method and outputs a modulation result as a modulated data signal.

SUMMARY

The receiving device described in Japanese Patent No. 3794622 compensates a portion that has not been compensated with an already-estimated portion of the transmission-path characteristics, and outputs the compensation result as a compensated data signal. That is, the receiving device described in Japanese Patent No. 3794622 aims to follow a change in the characteristics of the transmission path, but cannot reduce thermal noise or the like other than the transmission-path characteristics of the transmission path.

Other objects and novel features will be apparent from the description of this specification and the accompanying drawings.

According to an embodiment, a receiving device performs, in an equalization processing circuit that performs an equalizing process for a received signal sequence and outputs a sequence to be demodulated, a first transmission-path estimating process of generating a first compensation coefficient indicating a propagation coefficient of a transmission path of a received signal based on a preamble sequence, a second transmission-path estimating process of generating a second compensation sequence from a received header-replica sequence generated by performing demodulation and modulation for a header sequence included in a first equalizer-compensated output sequence in which distortion has been compensated based on the first compensation coefficient, a third transmission-path estimating process of generating a third compensation coefficient by synthesizing the first compensation coefficient and the second compensation coefficient with each other, and a propagation-path compensating process of performing a distortion compensating process for a payload sequence included in the received signal sequence based on the third compensation coefficient.

According to the embodiment, the receiving device can obtain a high noise reduction effect for a received signal.

BRIEF DESCRIPTION OF THE DRAWINGS

FIG. 1 illustrates the outline of a communication system that uses a receiving device according to a first embodiment.
FIG. 2 is a block diagram of a transmitting and receiving device according to the first embodiment.

FIG. 3 is a block diagram of an equalization processing circuit according to the first embodiment.

FIG. 4 is a block diagram of an equalizer according to the first embodiment.

FIG. 5 is a block diagram of a tracking processing circuit according to the first embodiment.

FIG. 6 is a block diagram of a phase compensating circuit according to the first embodiment.

FIG. 7 is a block diagram of a demodulation processing circuit and a modulation processing circuit according to the first embodiment.

FIG. 8 is a timing chart illustrating an operation of the equalizer according to the first embodiment.

FIG. 9 is a timing chart illustrating an operation of the equalization processing circuit according to the first embodiment.

FIG. 10 illustrates a process flow of the equalization processing circuit according to the first embodiment.

FIG. 11 is a flowchart illustrating a procedure of generating a header-replica series in the transmitting and receiving device according to the first embodiment.

FIG. 12 is a graph of noise characteristics of the receiving device according to the first embodiment.

FIG. 13 is a block diagram of an equalization processing circuit according to a second embodiment.

FIG. 14 is a block diagram of an equalizer according to the second embodiment.

FIG. 15 is a block diagram of a tracking processing circuit according to the second embodiment.

FIG. 16 is a block diagram of an equalizer-compensation canceling circuit according to the second embodiment.

FIG. 17 is a timing chart illustrating an operation of the equalizer according to the second embodiment.

FIG. 18 is a timing chart illustrating an operation of the equalization processing circuit according to the second embodiment.

FIG. 19 illustrates a process flow of the equalization processing circuit according to the second embodiment.

FIG. 20 is a block diagram of a synthesizing circuit in an equalizer according to a third embodiment.

FIG. 21 illustrates a communication system according to a fourth embodiment.

## DETAILED DESCRIPTION

For clarifying explanation, omission and simplification are made in the following description and the drawings as appropriate. Each of elements illustrated in the drawings as functional blocks performing various processes can be configured by a CPU, a memory, or another circuit if being achieved by hardware, and can be implemented by a program loaded to a memory if being implemented by software. Therefore, a person skilled in the art would understand that these functional blocks can be implemented by hardware only, software only, or a combination of hardware and software in various ways, and implementation is not limited to any of them. Throughout the drawings, the same element is labeled with the same reference sign, and redundant description is omitted as necessary.

The above-described program can be stored in various types of non-transitory computer-readable media and can be supplied to a computer. The non-transitory computer-readable media include various types of tangible storage media. Examples of the non-transitory computer-readable medium include a magnetic recording medium (for example, a flexible disk, a magnetic tape, and a hard disk drive), a magneto-optical recording medium (for example, a magneto-optical disk), a CD-ROM (Read Only Memory), a CD-R, a CD-R/W, and a semiconductor memory (for example, a mask ROM, a PROM (Programmable ROM), an EPROM (Erasable ROM), a flash ROM, and a RAM (Random Access Memory)). Also, the program can be supplied to the computer by various types transitory computer readable media. Examples of the transitory computer-readable medium include an electric signal, an optical signal, and an electromagnetic wave. The transitory computer-readable medium can supply the program to the computer via a wired communication path, such as an electric wire and an optical fiber, or a wireless communication path.

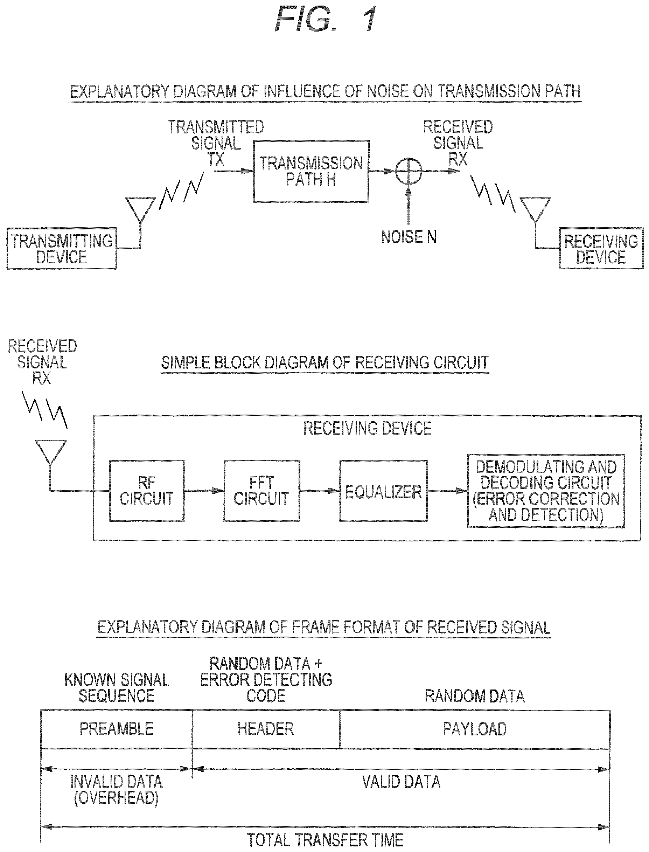

First, a communication system is described to which a receiving device described in an embodiment is applied. FIG. 1 illustrates the outline of a communication system that uses a receiving device according to a first embodiment. FIG. 1 illustrates noise on a transmission path in an upper portion, a simple block diagram of the receiving device in a middle portion, and a frame format of a received signal in a lower portion.

As illustrated in the upper portion of FIG. 1, the receiving device described in the embodiment receives a transmitted signal TX output from a transmitting device as a received signal RX. A transmission path between the transmitting device and the receiving device has propagation-path characteristics H. There is noise N, such as thermal noise, in the transmission path. Therefore, the transmitted signal TX and the received signal RX have a relation represented by Expression (1).

$$RX = TX \times H + N \quad \dots \quad (1)$$

As illustrated in the middle portion of FIG. 1, the receiving device includes an RF circuit, an FET (fast Fourier transform) circuit, an equalizer, and a demodulating and decoding circuit,. The RF circuit reduces the frequency of a received signal from a radio frequency band to a baseband frequency band. The FET circuit converts the received signal from a time domain to a frequency domain to generate a received signal sequence. The equalizer removes and corrects distortion caused by the propagation-path characteristics H from the received signal sequence. This removal and correction of distortion is referred to as compensation. The demodulating and decoding circuit performs demodulation and decoding for the received signal sequence that has been compensated by the equalizer, and outputs received data.

In the communication system illustrated in FIG. 1, a received signal is transmitted and received every frame including a predetermined data region. The data format of this frame (hereinafter, referred to as a frame format) is defined by communication standards. Thus, in an example of the frame format of the received signal illustrated in the lower portion of FIG. 1, one frame includes a preamble sequence, a header sequence, and a payload sequence. Among these data sequences, a valid data region to be transmitted and received is the header sequence and the payload sequence. The preamble sequence is a known signal sequence in which a value of data included in that sequence is already known in the standards. The header sequence includes random data having a random value and an error correcting code for the random data (CRC: Cyclic Redundancy Check). The payload sequence includes random data that is to be substantial data.

A compensation process in an equalizer is briefly described here. The equalizer estimates the propagation-path characteristics H by using the preamble sequence that is a known signal sequence, and compensates signal distortion caused by the propagation-path characteristics H. For example, assuming that a preamble sequence included in a received signal sequence converted into a frequency domain is RXpre and a preamble sequence in a frequency domain of a transmitted signal TX that has been transmitted from a transmitting device (the transmitted signal TX before being subjected to inverse Fourier transform) is TXpre, the propagation-path characteristics H are estimated by Expression (2).

$$H = RXpre/TXpre \ \ldots \ (2)$$

Because TXpre is known, the equalizer applies TXpre already held therein to RXpre obtained from the received signal sequence, thereby estimating the propagation-path characteristics H. The equalizer then divides the received signal sequence by the estimated propagation-path characteristics H, thereby compensating distortion caused by the propagation-path characteristics H included in the received signal RX. If there is no noise N, the propagation-path characteristics H can be obtained with high accuracy. However, noise N actually causes deterioration of estimation accuracy of the propagation-path characteristics H.

Therefore, deterioration of accuracy of the propagation-path characteristics H is described. A relation between a transmitted signal and a received signal of a preamble sequence is represented by Expression (3).

$$RXpre = TXpre \times H + N \ \ldots \ (3)$$

When Expression (3) is substituted into Expression (2), actually estimated propagation-path characteristics H' are represented by Expression (4).

$$H' = (TXpre \times H + N)/TXpre = H + N/TXpre \ \ldots \ (4)$$

Because TXpre has constant magnitude, the magnitude of an estimation error (N/TXpre) of the propagation-path characteristics H depends on the magnitude of noise N. However, it is known that noise N has a Gaussian distribution (average 0, dispersion $\sigma$). Further, in the preamble sequence, symbols of the same data sequence are repeated more than once. Therefore, the equalizer compresses noise N by synthesizing the estimated propagation-path characteristics H' for every symbol by in-phase addition (averaging).

However, there is a tendency in recent years that the number of symbols included in a preamble sequence is reduced in order to improve a data transfer efficiency. For example, in IEEE 802 .11ah that is one of radio communication standards, the number of symbols included in a preamble sequence is two, that is, very small.

A receiving device described in the following embodiment is configured to achieve compression of noise N, the number of compression times being more than the number of symbols included in a preamble sequence. The receiving device according to the following embodiment is described in detail below.

First Embodiment

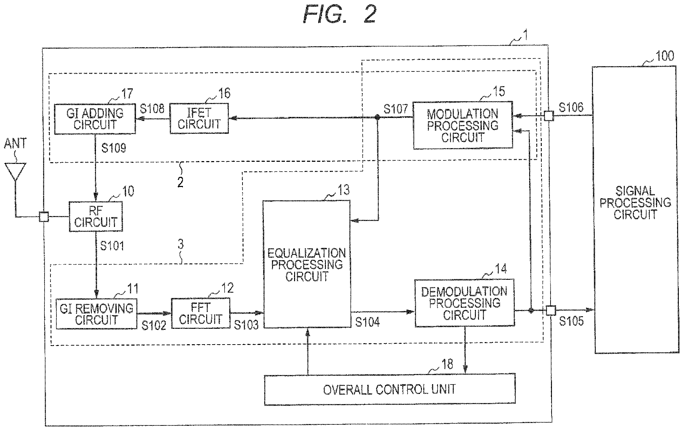

FIG. 2 is a block diagram of a transmitting and receiving device 1 according to the first embodiment. As illustrated in FIG. 2, the transmitting and receiving device 1 according to the first embodiment includes a transmitting device 2, a receiving device 3, and an RF circuit 10. FIG. 2 also illustrates a signal processing circuit 100 that processes data transmitted and received by the transmitting and receiving device 1. The transmitting device 2 performs various processes for transmitted data S106 output from the signal processing circuit 100, and outputs a transmitted signal S109. The RF circuit 10 converts the frequency of the transmitted signal S109 from a baseband frequency band to a radio frequency band, and outputs a transmitted signal TX via an antenna ANT. The RF circuit 10 also converts the frequency of a received signal RX received by the antenna ANT from the radio frequency band to the baseband frequency band, and outputs a received signal S101. The receiving device 3 performs various processes for the received signal S101 to generate received data S105, and outputs the received data S105 to the signal processing circuit 100. The transmitting device 2 and the receiving device 3 are described in more detail below.

The transmitting device 2 includes a modulation processing circuit 15, an IFET circuit 16, and a GI (guard interval) adding circuit 17. The modulation processing circuit 15 modulates the transmitted data S106 to generate a transmitted signal sequence S107. It is assumed that modulation performed by the modulation processing circuit 15 includes coding. The IFET circuit 16 performs inverse Fourier transform for the transmitted signal sequence S107 that has been coded, to convert the transmitted signal sequence S107 that is a signal in a frequency domain to a signal in a time domain (for example, a transmitted signal before GI addition S108). The GI adding circuit 17 adds a guard interval component to the transmitted signal before GI addition S108, and outputs the transmitted signal S109. The modulation processing circuit 15 of the transmitting device 2 is also used by the receiving device 3. When being used as a portion of the receiving device 3, the modulation processing circuit 15 performs coding and modulation for the received data S105 and outputs the transmitted signal sequence S107.

The receiving device 3 includes a GI removing circuit 11, an FET circuit 12, an equalization processing circuit 13, a demodulation processing circuit 14, and the modulation processing circuit 15. The GI removing circuit 11 removes the guide interval component included in the received signal S101 and outputs a GI-removed received signal S102. The FET circuit 12 performs Fourier transform for the GI-removed received signal S102 to convert the GI-removed received signal S102 that is a signal in a time domain to a signal in a frequency domain (for example, a received signal sequence S103). The equalization processing circuit 13 performs an equalizing process for the received signal sequence S103 and outputs a sequence to be demodulated S104. In this process, the equalization processing circuit 13 uses the transmitted signal sequence S107 generated by the modulation processing circuit 15 from the received data S105. The demodulation processing circuit 14 performs demodulation for the sequence to be demodulated S104 to generate the received data S105, and outputs the received data S105 to the signal processing circuit 100. It is assumed that demodulation performed by the demodulation processing circuit 14 includes decoding.

In the communication system according to the first embodiment, a received signal sequence has the frame format illustrated in the lower portion of FIG. 1, for example. That is, the received signal sequence according to the first embodiment includes a preamble sequence having a predetermined value, a header sequence including a random data sequence and an error code used for error correction of the random data sequence, and a payload sequence including data to be transmitted by the transmitting device to the receiving device. The equalization processing circuit 13 performs a first propagation-path estimating process, a second propagation-path estimating process, a third propagation-path estimating process, and a propagation-path compensating process. In the first propagation-path estimating process, a first compensation coefficient H1 is generated based on the preamble sequence. The first compensation coefficient H1 indicates a propagation coefficient of a transmission path for the received signal RX. In the second propagation-path estimating process, a second compensation coefficient H2 is generated from a header-replica sequence that is generated by performing demodulation and modulation for a header sequence included in a first equalizer-compensated output sequence in which distortion has been compensated based on the first compensation coefficient H1. In the third propagation-path estimating process, a third compensation coefficient H3 is generated by synthesizing the first compensation coefficient H1 and the second compensation coefficient H2 with each other. In the propagation-path compensating process, a distortion compensating process is performed for a payload sequence included in a received signal sequence based on the third compensation coefficient H3.

Further, the receiving device 3 according to the first embodiment generates the header-replica sequence used in the second propagation-path estimating process, based on a header sequence that has been determined as including no error in demodulation in the demodulation processing circuit 14. The details of the process of generating this header-replica sequence will be described later.

FIG. 2 also illustrates an overall control unit 18 as a block included in the transmitting and receiving device 1. The overall control unit 18 controls a selecting signal, an enable signal, a switch, an operation timing, and the like of the transmitting device 2 and the receiving device 3. FIG. 2 only illustrates a path for switching an operation of the equalization processing circuit 13 in accordance with an operation result of the demodulation processing circuit 14 as an example.

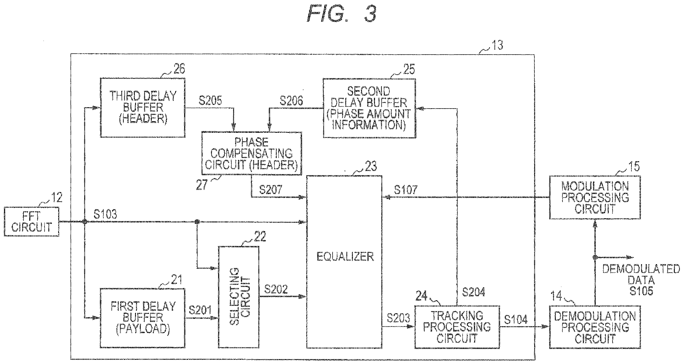

The transmitting and receiving device 1 has a feature in the configuration and the operation of the receiving device 3 and those of the equalization processing circuit 13 in the receiving device 3. Thus, the receiving device 3 is described in detail below. FIG. 3 is a block diagram of the receiving device 3 according to the first embodiment. FIG. 3 illustrates the demodulation processing circuit 14 and the modulation processing circuit 15 to clarify a relation between the sequence to be demodulated S104 output from the equalization processing circuit 13 and the transmitted signal sequence S107 input to the equalization processing circuit 13.

As illustrated in FIG. 3, the equalization processing circuit 13 includes a first delay buffer 21, an input selecting circuit 22, an equalizer 23, a tracking processing circuit 24, a second delay buffer 25, a third delay buffer 26, and a first phase compensating circuit (for example, a phase compensating circuit 27).

The first delay buffer 21 temporarily holds a payload sequence of a signal sequence included in the received signal sequence S103. The input selecting circuit 22 provides the received signal sequence S103 to the equalizer 23 in a period from the first transmission-path estimating process to the third transmission-path estimating process, and provides the payload sequence S201 stored in the first delay buffer 21 to the equalizer 23 in the propagation-path compensating process. FIG. 3 illustrates a signal sequence output by the input selecting circuit 22 as a sequence to be subjected to equalization S202. The equalizer 23 performs a distortion compensating process for the received signal sequence S103 (including the payload sequence S201) and outputs an equalizer-compensated output sequence S203.

The tracking processing circuit 24 compensates phase rotation of the equalizer-compensated output sequence S203 and outputs the sequence to be demodulated S104. The tracking processing circuit 24 also outputs phase amount information S204 to the second delay buffer 25. The phase amount information S204 indicates the magnitude of phase compensation applied to the equalizer-compensated output sequence S203. The second delay buffer 25 temporarily holds the phase amount information S204. The third delay buffer 26 temporarily holds a header sequence S205 included in the received signal sequence S103. The phase compensating circuit 27 applies phase amount information S206 to the header sequence S205, and generates a phase-compensated header sequence S207 in which phase rotation of the header sequence S106 has been compensated.

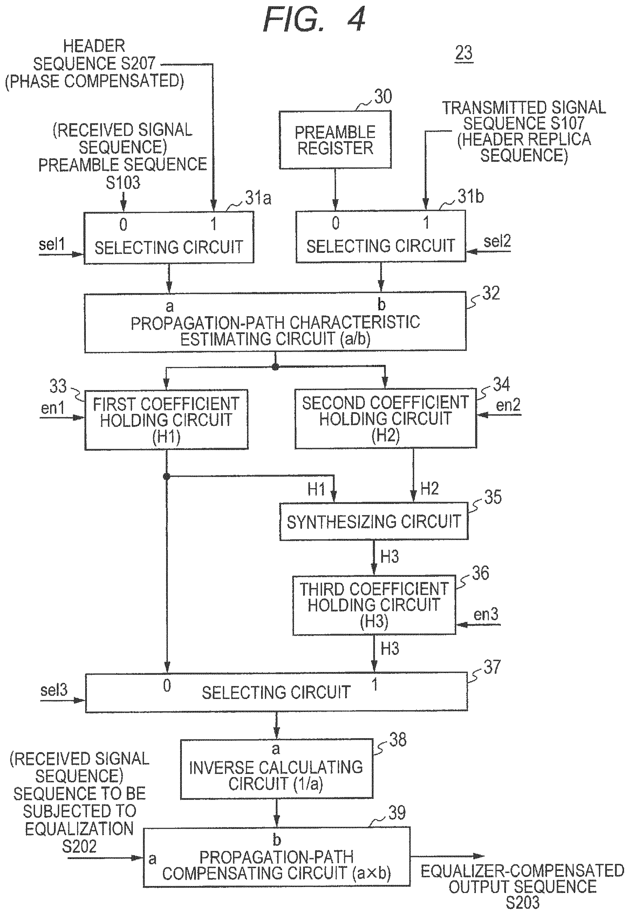

In the equalization processing circuit 13, the equalizer 23 generates the third compensation coefficient H3 by using the received signal sequence S103, the header-replica sequence included in the transmitted signal sequence S107, and the phase-compensated header sequence S207. The equalization processing circuit 13 also performs an equalizer compensating process for the payload sequence S201 included in the sequence to be subjected top equalization S202 by using the generated third compensation coefficient H3. FIG. 4 is a block diagram of the equalizer 23 according to the first embodiment.

As illustrated in FIG. 4, the equalizer 23 includes a preamble register 30, a first selecting circuit 31a, a second selecting circuit 31b, a propagation-path characteristics estimating circuit 32, a first coefficient holding circuit 33, a second coefficient holding circuit 34, a synthesizing circuit 35, a third coefficient holding circuit 36, a third selecting circuit 37, an inverse calculating circuit 38, and a propagation-path compensating circuit 39.

The preamble register 30 stores therein preamble information that indicates a preamble sequence. This preamble information is stored in the preamble register 30 from the overall control unit 18 or the like before start of a propagation-path characteristics estimating process. The preamble information has a different value in every communication standard, for example.

The first selecting circuit 31a selects and outputs the preamble sequence S103 in the first transmission-path estimating process and selects and outputs the phase-compensated header sequence S107 in the second transmission-path estimating process. A selecting signal sell provided from the overall control unit 18 switches the sequence selected and output by the first selecting circuit 31a. The second selecting circuit 31b selects and outputs the preamble information stored in the preamble register 30 in the first transmission-path estimating process, and selects and outputs a header-replica sequence (hereinafter, the header-replica sequence is also labeled with S107) included in the transmitted signal sequence S107 output from the modulation processing circuit 15 in the second transmission-path estimating process. A selecting signal sel2 provided from the overall control unit 18 switches the sequence selected and output by the second selecting circuit 31b.

The propagation-path-characteristics estimating circuit 32 generates the first compensation coefficient H1 based on the preamble sequence output from the first selecting circuit 31a and the preamble information output from the second selecting circuit 31b in the first transmission-path estimating process. The propagation-path characteristics estimating circuit 32 also generates the second compensation coefficient H2 based on the phase-compensated header sequence S207 output from the first selecting circuit 31a and the header-replica sequence S107 output from the second selecting circuit 31b in the second transmission-path estimating process. The propagation-path characteristics estimating circuit 32 divides an output value of the first selecting circuit 31a input to a port a by an output value of the second selecting circuit 31b input to a port b to calculate the compensation coefficient.

The first coefficient holding circuit 33 stores a value input thereto when an enable signal en1 is in an enable state, and holds a previously stored value when the enable signal en1 is in a disenable state. The first coefficient holding circuit 33 is controlled by the enable signal en1 to hold the first compensation coefficient H1. The second coefficient holding circuit 34 stores a value input thereto when an enable signal en2 is in an enable state, and holds a previously stored value when the enable signal en2 is in a disenable state. The second coefficient holding circuit 34 is controlled by the enable signal en2 to hold the second compensation coefficient H2.

The synthesizing circuit 35 synthesizes the first compensation coefficient H1 and the second compensation coefficient H2 with each other to generate the third compensation coefficient H3. The synthesizing circuit 35 outputs an average value or a weighted average value of the two compensation coefficients as the third compensation coefficient H3, for example. The third coefficient holding circuit 36 stores a value input thereto when an enable signal en3 is in an enable state, and holds a previously stored value when the enable signal en3 is in a disenable state. The third coefficient holding circuit 36 is controlled by the enable signal en3 to hold the third compensation coefficient H3.

The third selecting circuit 37 switches the compensation coefficient to be output, based on the selecting signal sel3. The third selecting circuit 37 selects and outputs the first compensation coefficient H1 until the third compensation coefficient H3 is generated, and selects and outputs the third compensation coefficient H3 after the third compensation coefficient H3 is generated.

The inverse calculating circuit 38 calculates an inverse of the compensation coefficient output from the third selecting circuit 37. The propagation-path compensating circuit 39 performs a distortion compensating process for the received signal sequence by using the inverse of the compensation coefficient output from the inverse calculating circuit 38, and outputs the equalizer-compensated output sequence S203.

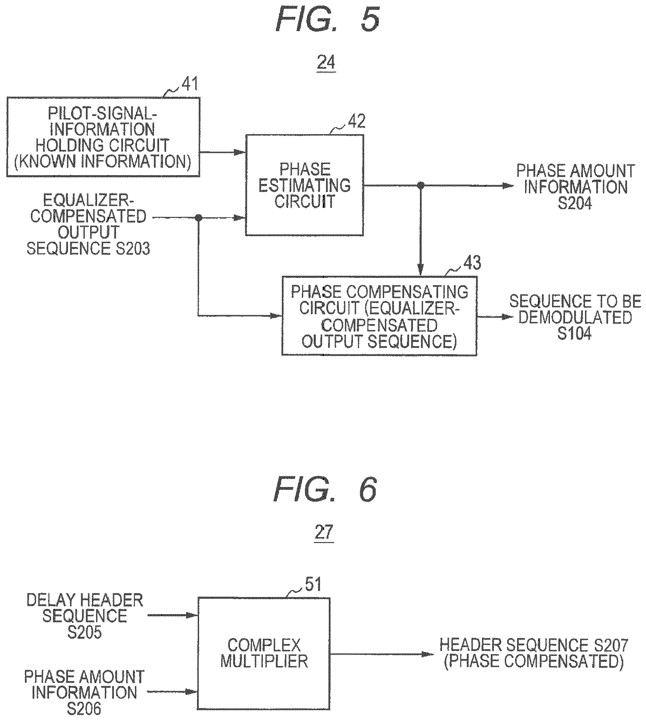

Next, the tracking processing circuit 24 is described in detail. FIG. 5 is a block diagram of the tracking processing circuit 24 according to the first embodiment. As illustrated in FIG. 5, the tracking processing circuit 24 includes a pilot-signal-information holding unit 41, a phase estimating circuit 42, and a second phase compensating circuit (for example, a phase compensating circuit 43).

The pilot-signal-information holding unit 41 is a pilot register that stores therein pilot-signal information that is to be a reference for a delay amount of a header sequence. This pilot-signal information is stored in the pilot-signal-information holding unit 41 before the overall control unit 18 or the like performs phase estimation by the phase estimating circuit 42 to conform to a communication standard, for example.

The phase estimating circuit 42 compares the pilot-signal information and a header sequence in the equalizer-compensated output sequence S203 with each other to estimate a phase amount, and generates the phase amount information S204 that indicates the magnitude of phase rotation. The phase compensating circuit 43 compensates the phase of the equalizer-compensated output sequence S203 based on the phase amount information S204, and outputs a compensated signal as the sequence to be demodulated S104.

Next, the phase compensating circuit 27 is described in detail. FIG. 6 is a block diagram of the phase compensating circuit 27 according to the first embodiment. As illustrated in FIG. 6, the phase compensating circuit 27 includes a complex multiplier 51. The complex multiplier 51 performs complex multiplication of the delay header sequence S205 stored in the third delay buffer 26 and the phase amount information S206 stored in the second delay buffer 25 to compensate phase rotation of the delay header sequence S205, and outputs the header sequence S207 (phase-compensated header sequence).

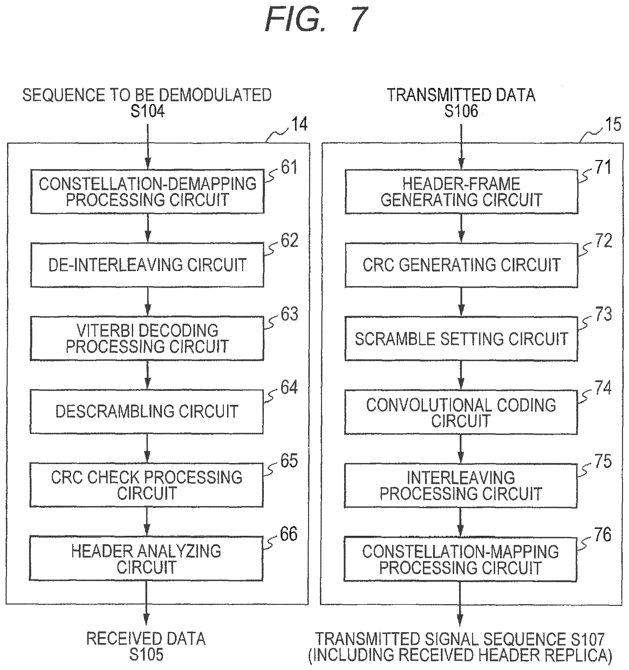

Next, the demodulation processing circuit 14 and the modulation processing circuit 15 are described in detail. FIG. 7 is a block diagram of the demodulation processing circuit and the modulation processing circuit according to the first embodiment. The demodulation processing circuit 14 and the modulation processing circuit 15 illustrated in FIG. 7 are merely an example, and the configuration thereof may be changed in accordance with a communication standard.

As illustrated in FIG. 7, the demodulation processing circuit 14 includes a constellation-demapping processing circuit 61, a de-interleaving circuit 62, a Viterbi decoding processing circuit 63, a descrambling circuit 64, a CRC check processing circuit 65, and a header analyzing circuit 66. In the demodulation processing circuit 14, the constellation-demapping processing circuit 61, the de-interleaving circuit 62, the Viterbi decoding processing circuit 63, the descrambling circuit 64, and the CRC check processing circuit 65 perform processing in that order, thereby performing demodulation and decoding. The header analyzing circuit 66 analyzes the meaning of information indicated by a header sequence when the header sequence is input as the sequence to be demodulated S104, and determines processing for a payload sequence, for example, to which one of subsequent circuits the payload sequence is output.

The modulation processing circuit 15 includes a header-frame generating circuit 71, a CRC generating circuit 72, a scramble setting circuit 73, a convolutional coding circuit 74, an interleaving processing circuit 75, and a constellation-mapping processing circuit 76. In the modulation processing circuit 15, the header-frame generating circuit 71 generates a header frame and adds it to a payload sequence. The CRC generating circuit 72 then generates a CRC for random data stored in the header frame and stores the CRC in the header frame. Thereafter, the scramble setting circuit 73, the convolutional coding circuit 74, the interleaving processing circuit 75, and the constellation-mapping processing circuit 76 perform processing in that order, so that the modulation processing circuit 15 outputs the transmitted signal sequence S107.

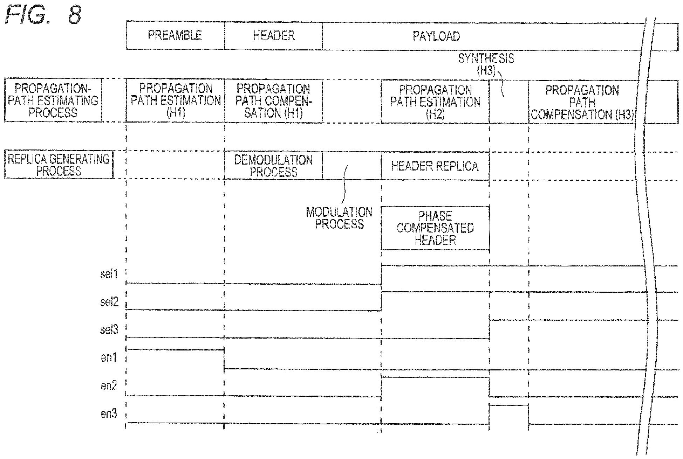

Next, an operation of the receiving device 3 according to the first embodiment is described. The receiving device 3 according to the first embodiment has a feature in an operation of the equalizer 23. FIG. 8 is a timing chart illustrating an operation of the equalizer 23 according to the first embodiment.

As illustrated in FIG. 8, the equalizer 23 performs the first propagation-path estimating process in a period in which a preamble sequence is input (a period of propagation-path estimation (H1) in FIG. 8) . In the first propagation-path estimating process, the overall control unit 18 places the selecting signals sell to sel3 at a low level, and the equalizer 23 generates the first compensation coefficient H1 based on a preamble sequence included in the received signal sequence S103 and preamble information stored in the preamble register 30. In this generation, the enable signal en1 is placed in an enable state (for example, at a high level) . This causes the first coefficient holding circuit 33 to output the first compensation coefficient H1 after the first compensation coefficient H1 has been generated. Also, because the selecting signal sel3 is at a low level in this period, the first compensation coefficient H1 stored in the first coefficient holding circuit 33 is transferred to the propagation-path compensating circuit 39.

Subsequently, in a period in which a header sequence is input, propagation-path compensation for the header sequence is performed based on the first compensation coefficient H1 obtained in the first propagation-path estimating process. Further, demodulation is performed for an equalizer-compensated output sequence that has been compensated with the first compensation coefficient H1 in this period. After all of the header sequence has been input, modulation is performed for the demodulated header sequence in the receiving device 3. By this modulation, the header-replica sequence S107 is generated. Further, the phase-compensated header sequence S207 is generated by the phase compensating circuit 27 at a timing of generation of the header-replica sequence S107. The second propagation-path estimating process (a period of propagation estimation (H2) in FIG. 8) is then performed, which generates the second compensation coefficient H2 by using the header-replica sequence S107 and the phase-compensated header sequence S207.

In the second propagation-path estimating process, the overall control unit 18 places the selecting signals sell and sel2 at a high level and places the selecting signal sel3 at a low level, and the equalizer 23 generates the second compensation coefficient H2 based on the header sequence S207 and the transmitted signal sequence S107. In this generation, the enable signal en2 is placed in an enable state (for example, at a high level) . This causes the second coefficient holding circuit 34 to output the second compensation coefficient H2 after the second compensation coefficient H2 has been generated. Also, because the selecting signal sel3 is at a low level in this period, the first compensation coefficient H1 stored in the first coefficient holding circuit 33 is transferred to the propagation-path compensating circuit 39.

Subsequently, the equalizer 23 performs the third propagation-path estimating process (a period of synthesizing (H3) in FIG. 8) in which it synthesizes the first compensation coefficient H1 and the second compensation coefficient H2 with each other to generate the third compensation coefficient H3. In the third propagation-path estimating process, the overall control unit 18 places the selecting signals sell to sel3 at a high level, and the equalizer 23 synthesizes the first compensation coefficient H1 and the second compensation coefficient H2 with each other to generate the third compensation coefficient H3. In this generation, the enable signal en3 is placed in an enable state (for example, at a high level). This causes the third coefficient holding circuit 36 to output the third compensation coefficient H3 after the third compensation coefficient H3 has been generated. Also, because the selecting signal sel3 is at a high level in this period, the third compensation coefficient H3 stored in the third coefficient holding circuit 36 is transferred to the propagation-path compensating circuit 39. Thereafter, the equalizer 23 performs a propagation-path compensating process (a period of propagation-path compensation (H3) in FIG. 8) in which it compensates a payload sequence included in the received signal sequence S103 by using the third compensation coefficient H3. Until the third compensation coefficient H3 is generated, the equalization processing circuit 13 accumulates a received payload sequence in the first delay buffer 21. At a time when the third compensation coefficient H3 has been generated, the equalization processing circuit 13 outputs the accumulated payload sequence in the order of accumulation.

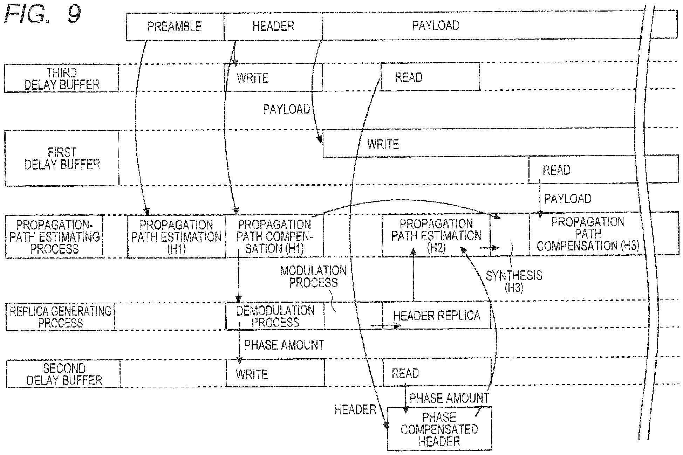

Next, an operation of the equalization processing circuit 13 is described. FIG. 9 is a timing chart illustrating an operation of the equalization processing circuit according to the first embodiment. As illustrated in FIG. 9, when a preamble sequence is input, the equalization processing circuit 13 generates the first compensation coefficient H1 by the first propagation-path estimating process (propagation-path estimation (H1) in FIG. 9).

Thereafter, when a header sequence is input, the equalization processing circuit 13 writes the header sequence into the third delay buffer 26 and performs a compensating process that applies the first compensation coefficient H1 to the input header sequence (the propagation-path compensation (H1)). Demodulation and modulation are then performed for the header sequence that has been subjected to the compensating process, so that a header-replica sequence is generated. In this demodulation, the phase amount information S204 is generated by the tracking processing circuit 24 and is written into the second delay buffer 25. At a timing of generation of the header-replica sequence, the delay header sequence S205 is read out from the third delay buffer 26, and the phase amount information S206 is read out from the second delay buffer 25. Then, the phase compensating circuit 27 generates the header sequence S207.

The equalization processing circuit 13 then performs the second propagation-path estimating process (propagation estimation (H2)), which generates the second compensation coefficient H2, by using the header sequence S107 and the header-replica sequence. Thereafter, the third propagation-path estimating process (synthesizing (H3)) is performed, which generates the third compensation coefficient H3 by synthesizing the first compensation coefficient H1 and the second compensation coefficient H2 with each other. Modulation for the header sequence, generation of the header-replica sequence, generation of the header sequence S207, the second propagation-path estimating process, and the third propagation-path estimating process are performed in a period in which a payload sequence is input.

The third compensation coefficient H3 has not been generated yet at a time of input of the payload sequence in the equalization processing circuit 13. Thus, the equalization processing circuit 13 accumulates the input payload sequence in the first delay buffer 21 and, at a time when the third compensation coefficient H3 has been generated, reads out the accumulated payload sequence from the first delay buffer 21 in the order of accumulation. The equalization processing circuit 13 then performs a propagation-path compensating process that applies the third compensation coefficient H3 to the read payload sequence.

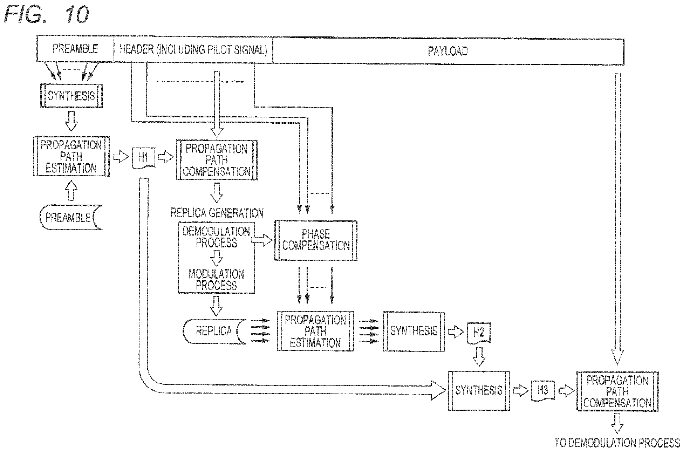

Next, an operation flow illustrated in FIG. 9 is described from another point of view. FIG. 10 illustrates a process flow of an equalization processing circuit according to the first embodiment. As illustrated in FIG. 10, when a preamble sequence is input, the equalization processing circuit 13 synthesizes a data sequence forming the preamble sequence to generate a first synthesized value. The equalization processing circuit 13 then performs the first propagation-path estimating process based on the first synthesized value and preamble information, thereby generating the first compensation coefficient H1.

Subsequently, when a header sequence is input, the equalization processing circuit 13 performs a propagation-path compensating process that applies the first compensation coefficient H1 to that header sequence. By using the header sequence generated in this propagation-path compensating process, the equalization processing circuit 13 generates a header-replica sequence. Further, the phase amount information S204 is generated in generation of the header-replica sequence. The equalization processing circuit 13 performs a phase compensating process that compensates phase rotation of the input header sequence by using this phase amount information S204. The equalization processing circuit 13 also performs the second propagation-path estimating process by using the phase-compensated header sequence and the header-replica sequence. This second propagation-path estimating process synthesizes the second compensation coefficient H2 to generate the second compensation coefficient H2 that is a synthesized value, because the second compensation coefficient H2 is in the format of a data sequence.

Subsequently, the equalization processing circuit 13 synthesizes the first compensation coefficient H1 and the second compensation coefficient H2 with each other to generate the third compensation coefficient H3. The equalization processing circuit 13 then performs a propagation-path compensating process for a payload sequence by using the third compensation coefficient H3. In a period after the third transmission-path estimating process, that is, a period after the above-described processes has been performed, the transmitting and receiving device 1 according to the first embodiment operates in the following manner. The demodulation processing circuit 14 demodulates the sequence to be demodulated S103 and outputs the received data sequence S105 tat is generated to the signal processing circuit 100 in a later stage. The modulation processing circuit 15 modulates the transmitted data sequence S106 output from the signal processing circuit 100 to generate a transmitted signal sequence S107, and outputs the generated transmitted signal sequence S107 to a transmission processing circuit provided in a later stage.

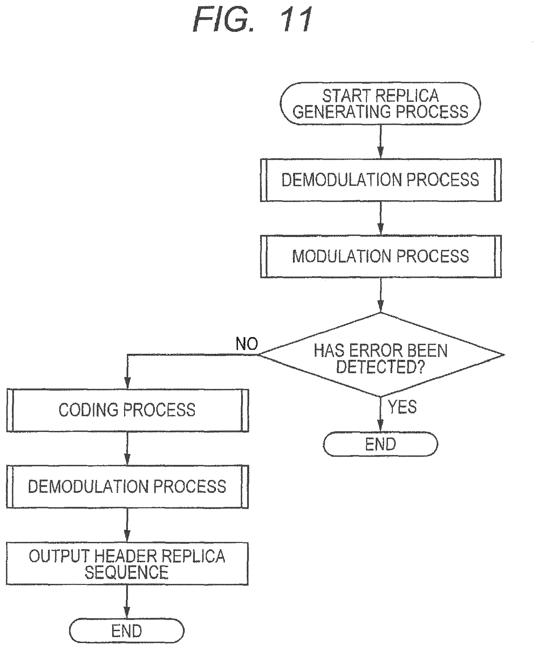

The receiving device 3 according to the first embodiment has a feature in a generation method of a header-replica sequence. Specifically, the receiving device 3 according to the first embodiment operates in the following manner in a period after the first transmission-path estimating process and before the third transmission-path estimating process. The demodulation processing circuit demodulates the aforementioned sequence to be demodulated, which includes a header sequence, and outputs the demodulated header sequence to the modulation processing circuit. The modulation processing circuit performs modulation for the received demodulated header sequence and outputs a header-replica sequence. Thus, a generation method of the header-replica sequence is described. FIG. 11 is a flowchart illustrating a procedure of generating a header-replica sequence in the transmitting and receiving device according to the first embodiment.

As illustrated in FIG. 11, the receiving device 3 according to the first embodiment performs demodulation and decoding for a header sequence. In this decoding, when an error has been detected in the header sequence, the receiving device 3 according to the first embodiment removes the header sequence including the error from an object for which a header-replica sequence is generated. Meanwhile, when no error has been detected in the header sequence in decoding, the receiving device 3 according to the first embodiment performs decoding and modulation for that header sequence and generates the header-replica sequence.

That is, the header-replica sequence is generated only from the header sequence without an error, and therefore the second compensation coefficient H2 does not include an error component (noise). Thus, the receiving device 3 according to the first embodiment can estimate highly accurate propagation-path characteristics.

As described above, the receiving device 3 according to the first embodiment calculates the second compensation coefficient H2 estimated from a header sequence, in addition to the first compensation coefficient H1 estimated from a preamble sequence, and generates the third compensation coefficient H3 to be applied to a payload sequence by synthesizing the first compensation coefficient H1 and the second compensation coefficient H2 with each other. Therefore, the receiving device 3 according to the first embodiment can make the number of compensation coefficients to be subjected to weighted averaging larger than the number of symbols included in the preamble sequence, which results in a high noise compression effect.

Further, the receiving device 3 according to the first embodiment generates a header-replica sequence to be used for estimation of the second compensation coefficient H2, from a header sequence not including an error in decoding. Therefore, the estimation accuracy of the second compensation coefficient H2 cannot be deteriorated because of an influence of noise included in the header sequence. That is, the second compensation coefficient H2, which is highly accurate, is increased in the receiving device 3 according to the first embodiment, so that it is possible to further enhance the compression effect. Meanwhile, the receiving device described in Japanese Patent No. 3794622 uses a replica for estimation of transmission-path characteristics even if the replica includes an error component (noise), and therefore has a problem that accuracy of an estimated value of the transmission-path characteristics is low and a noise compression effect is significantly deteriorated in an environment including many error components (noise).

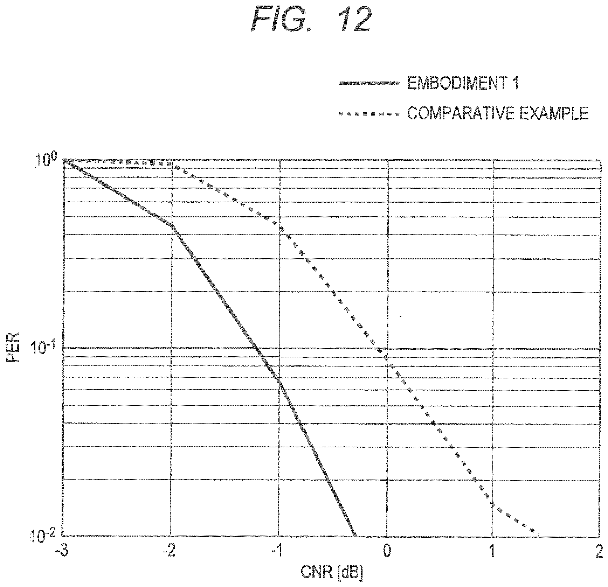

Here, noise characteristics of the receiving device 3 according to the first embodiment are described. FIG. 12 is a graph of noise characteristics of the receiving device 3 according to the first embodiment. In the graph of FIG. 12, the horizontal axis represents a carrier-to-noise power ratio (CNR) and the vertical axis represents a packet error rate (PER). FIG. 12 also illustrates noise characteristics of a receiving device that calculates a compensation coefficient by using a preamble sequence only, as a comparative example. Referring to FIG. 12, when the packet error rate is 10%, CNR is improved in the receiving device 3 according to the first embodiment by 1 dB or more as compared with the receiving device of the comparative example. It is found from the horizontal axis of the graph of FIG. 12 that improvement by 1 dB is large and therefore a noise compression effect by the receiving device 3 according to the first embodiment is very large.

By reducing the influence of noise on the compensation coefficient in this manner, a reaching distance of a radio signal can be made longer. In recent years, devices using a radio signal are increasing, and it becomes important to cover more areas by less base stations. In particular, in a case of a non-mobile station, such as a smart meter, a transmission path to a base station is fixed, and use of the receiving device 3 according to the first embodiment enables communication even if the non-mobile station is arranged at a position far away from the base station.

Processing of the equalization processing circuit 13 can be also achieved by a program. In this case, the equalization processing circuit 13 is configured by an arithmetic processing unit that can execute a program, and a register, a memory, or the like is used as a circuit for holding a value, such as a delay buffer or a holding circuit, in the equalization processing circuit 13. In this case, the transmitting and receiving device 1 according to the first embodiment includes the equalization processing circuit 13 that performs an equalizing process for the received signal sequence S103 generated from a received signal and outputs the sequence to be demodulated S104, the demodulation processing circuit 14 that demodulates the sequence to be demodulated S104 and outputs the received data sequence S105, and the modulation processing circuit 15 that modulates the received data sequence S105 and generates the transmitted signal sequence S107. In the equalization processing circuit 13, an equalization processing program is executed. The equalization processing circuit that executes the equalization processing program performs the first transmission-path estimating process of generating the first compensation coefficient H1 indicating a propagation coefficient of a transmission path of a received signal, based on a preamble sequence included in the received signal sequence S103 and having a predetermined value, the first propagation-path compensating process of applying the first compensation coefficient H1 to a header sequence included in the received signal sequence S103 to generate the first equalizer-compensated output sequence S203 in which distortion has been compensated, the second transmission-path estimating process of generating the second compensation coefficient H2 from the header-replica sequence S107 generated by performing demodulation and modulation for a header sequence included in the first equalizer-compensated output sequence S203, the third transmission-path estimating process of synthesizing the first compensation coefficient H1 and the second compensation coefficient H2 with each other to generate the third compensation coefficient H3, and the second propagation-path compensating process of performing a distortion compensating process for a payload sequence included in the received signal sequence S103 based on the third compensation coefficient H3.

Further, the equalization processing circuit 13 includes the first delay buffer 21, the second delay buffer 25, and the third delay buffer 26. The equalization processing circuit 13 performs an equalizing process of performing a distortion compensating process for the received signal sequence S201 and outputting the equalizer-compensated output sequence S203, a tracking process of compensating phase rotation of the equalizer-compensated output sequence S203 and outputting the sequence to be demodulated S104, a phase-amount information holding process of temporarily holding the phase amount information S204 indicating the magnitude of phase rotation applied to the equalizer-compensated output sequence S203 in the second delay buffer 25, a header-sequence holding process of temporarily holding a header sequence in the third delay buffer 26, the first phase compensating process of applying the phase amount information S206 for the header sequence to generate the phase-compensated header sequence S207 in which the phase rotation of the header sequence has been compensated, a payload holding process of temporarily holding a payload sequence in the first delay buffer 21, and an input selecting process of selecting the received signal sequence S103 as an object of equalization in a period from the first transmission-path estimating process to the third transmission-path estimating process and selecting the payload sequence S201 stored in the first delay buffer 21 as the object of equalization in the second propagation-path compensating process.

In the tracking process, the equalization processing circuit 13 performs a phase estimating process of comparing pilot-signal information that is a reference of a phase rotation amount of a header sequence and a header sequence in the equalizer-compensated output sequence S203 to each other to estimate a phase rotation amount and generating phase amount information indicating the magnitude of phase rotation, and the second phase compensating process of compensating phase rotation of the equalizer-compensated output sequence S203 based on the phase amount information and outputting a compensated signal as a sequence to be demodulated.

Second Embodiment

In the second embodiment, an equalization processing circuit 13a is described, which is another example of the equalization processing circuit 13 in the first embodiment. In the second embodiment, the same component as that described in the first embodiment is labeled with the same reference sign as that in the first embodiment and the description thereof is omitted.

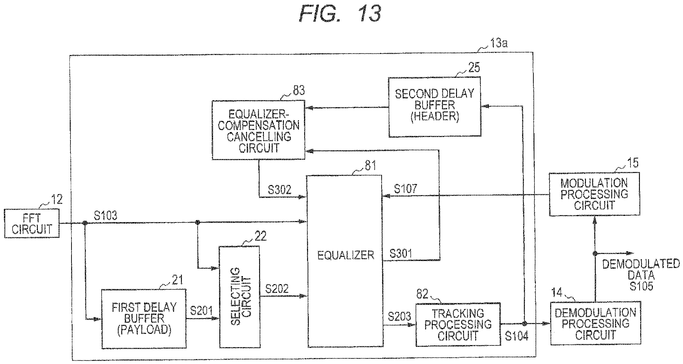

FIG. 13 is a block diagram of an equalization processing circuit according to the second embodiment. As illustrated in FIG. 13, the equalization processing circuit 13a according to the second embodiment is obtained by removing the third delay buffer 26 and the phase compensating circuit 27 from the equalization processing circuit 13, replacing the equalizer 23 and the tracking processing circuit 24 with an equalizer 81 and a tracking processing circuit 82, and adding an equalizer-compensation cancelling circuit 83. Further, in the equalization processing circuit 13a according to the second embodiment, a header sequence included in the sequence to be demodulated S104 output from the tracking processing circuit 82 is stored in the second delay buffer 25.

That is, the equalization processing circuit 13a according to the second embodiment includes the first delay buffer 21, the input selecting circuit 22, the equalizer 81, the tracking processing circuit 82, the second delay buffer 25, and the equalizer-compensation cancelling circuit 83. The first delay buffer 21 temporarily holds a payload sequence. The equalizer 81 performs a distortion compensating process for the received signal sequence S103 and outputs the equalizer-compensated output sequence S203. The equalizer 81 also outputs the first compensation coefficient H1 as a first coefficient signal S301. The tracking processing circuit 82 compensates phase rotation of the equalizer-compensated output sequence S203 and outputs the sequence to be demodulated S104. The second delay buffer 25 temporarily holds the sequence to be demodulated S104. The equalizer-compensated cancelling circuit 83 applies the first compensation coefficient H1 to a portion of the sequence to be demodulated S104, which corresponds to a header sequence, to generate a phase-rotation-compensated header sequence S302 in which an equalizer compensation effect of the header sequence has been cancelled. The input selecting circuit 22 provides the received signal sequence S103 to the equalizer 81 in a period from the first transmission-path estimating process to the third transmission-path estimating process, and provides the payload sequence stored in the first delay buffer 21 to the equalizer 81 in a propagation-path compensating process.

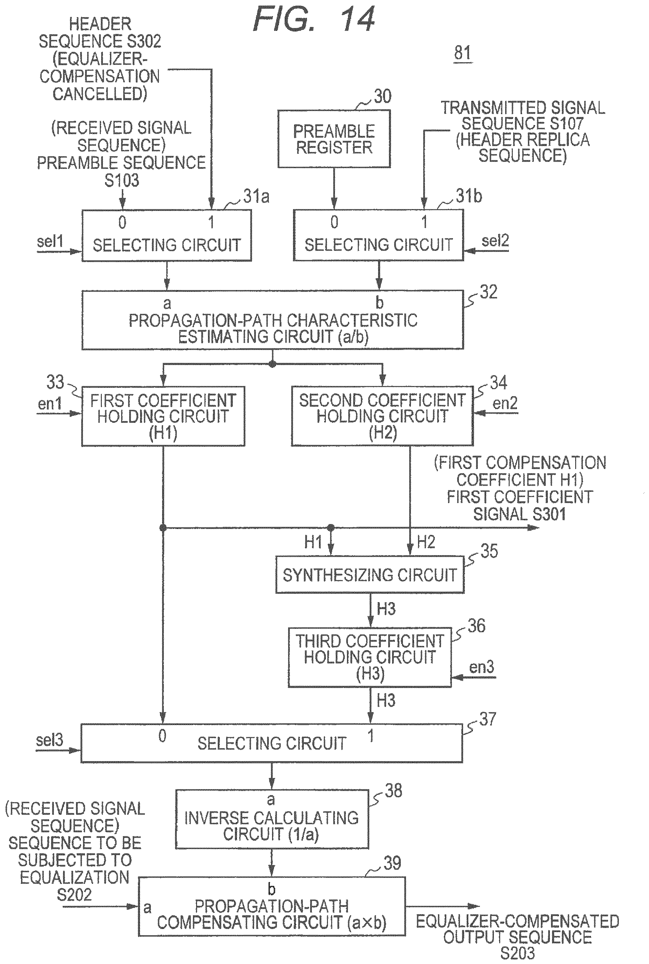

Here, the equalizer 81 is described in detail. FIG. 14 is a block diagram of the equalizer 81 according to the second embodiment. As illustrated in FIG. 14, the equalizer 81 corresponds to the equalizer 23 according to the first embodiment with a path for outputting the first compensation coefficient H1 added thereto. The equalizer 81 outputs the first compensation coefficient H1 as the first coefficient signal S301. Further, the header sequence S302 is input to the equalizer 81, in place of the header sequence S207 input to the equalizer 23 according to the first embodiment. The header sequence S302 is a sequence in which an equalizer compensation effect has been cancelled in the equalizer-compensation cancelling circuit 83.

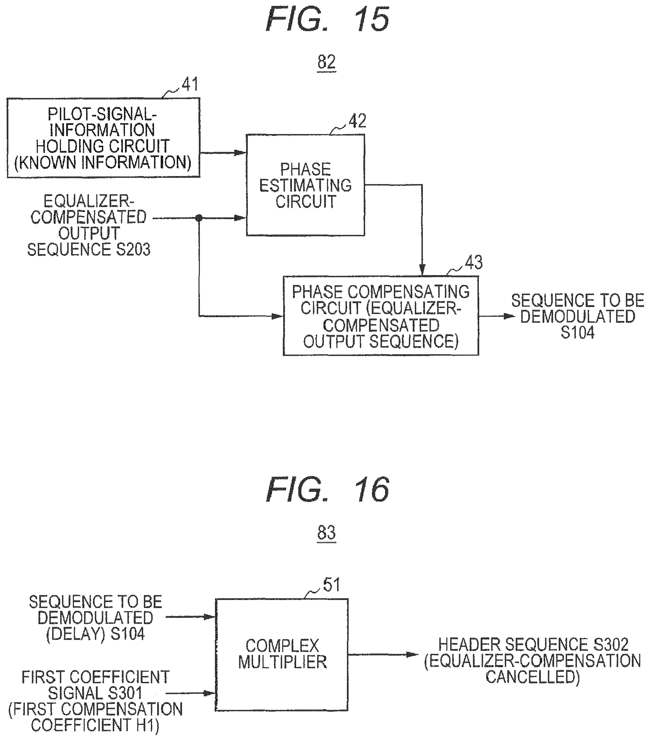

Subsequently, the tracking processing circuit 82 is described in detail. FIG. 15 is a block diagram of the tracking processing circuit 82 according to the second embodiment. As illustrated in FIG. 15, the tracking processing circuit 82 corresponds to the tracking processing circuit 24 according to the first embodiment from which a path for outputting the phase amount information S204 is removed.

Subsequently, the equalizer-compensation cancelling circuit 83 is described in detail. FIG. 16 is a block diagram of the equalizer-compensation canceling circuit 83 according to the second embodiment. As illustrated in FIG. 16, the equalizer-compensation cancelling circuit 83 includes the complex multiplier 51. To the complex multiplier 51 are input the sequence to be demodulated S104 delayed by the second delay buffer 25 and the first compensation coefficient H1 provided as the first coefficient signal S301. The complex multiplier 51 of the equalizer-compensation cancelling circuit 83 performs complex multiplication of a header sequence provided as the sequence to be demodulated S104 and the first compensation coefficient H1, and outputs the (equalizer-compensation-cancelled) header sequence S302 in which an effect of compensation by the equalizer performed for the sequence to be demodulated S104 has been canceled.

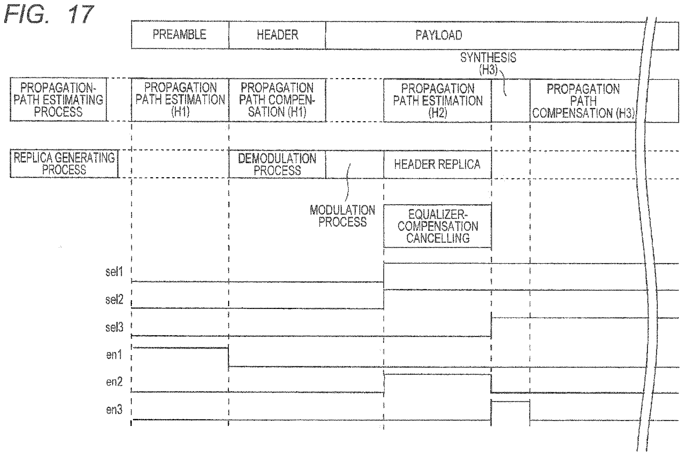

Next, an operation of the equalizer 81 according to the second embodiment is described. FIG. 17 is a timing chart illustrating an operation of the equalizer 81 according to the second embodiment. This description refers to a difference from the operation of the equalizer 23 according to the first embodiment. As illustrated in FIG. 17, the equalizer 81 according to the second embodiment generates the equalizer-compensation-cancelled header sequence S302 in place of the phase-compensated header sequence S207.

Here, a relation between the phase-compensated header sequence S207 and the equalizer-compensation-cancelled header sequence S302 is described. The phase-compensated header sequence S207 is obtained by phase rotation of the header sequence S205 input to the equalization processing circuit 13. Meanwhile, the equalizer-compensation-cancelled header sequence S302 is obtained by equalizer compensation using the first compensation coefficient H1 by the equalizer 81, followed by compensating phase rotation by the tracking processing circuit 82, and thereafter cancelling equalizer compensation by using the first compensation coefficient H1. That is, an effect applied to the equalizer-compensation-canceled header sequence S302 is only compensation of phase rotation by the tracking processing circuit 82, and the phase-compensated header sequence S207 and the equalizer-compensation-canceled header sequence S302 are substantially the same signal as each other.

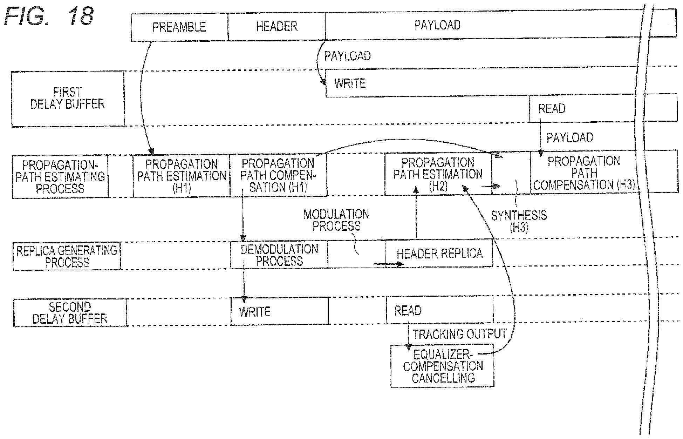

Next, an operation of the equalization processing circuit 13a according to the second embodiment is described. FIG. 17 is a timing chart illustrating an operation of the equalization processing circuit 13a according to the second embodiment. This description refers to a difference from the operation of the equalization processing circuit 13 according to the first embodiment. As illustrated in FIG. 18, the equalization processing circuit 13a according to the second embodiment generates the equalizer-compensation-cancelled header sequence S302 in place of the phase-compensated header sequence S207. Further, in generation of this equalizer-compensation-canceled header sequence S302, the equalization processing circuit 13a compensates phase rotation of the header sequence for which compensation based on the first compensation coefficient H1 has been performed, and writes the header sequence (a tracking output in FIG. 18) for which phase rotation has been compensated into the second delay buffer 25. The equalizer-compensation-canceled header sequence S302 is then generated by using the header sequence held in the second delay buffer 25.

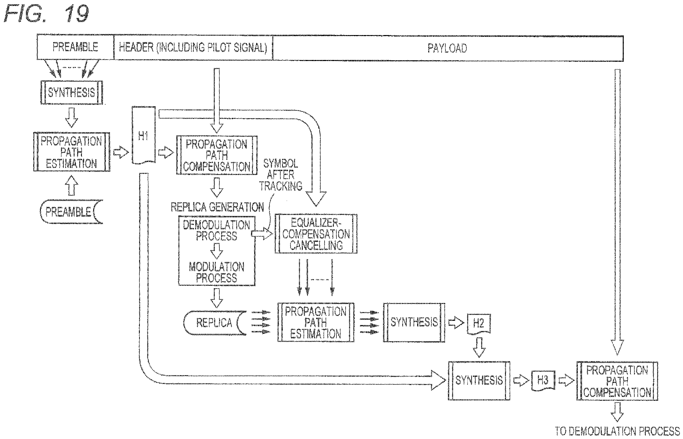

Next, an operation flow illustrated in FIG. 18 is described from another point of view. FIG. 19 illustrates a process flow of the equalization processing circuit 13a according to the second embodiment. As illustrated in FIG. 19, the equalization processing circuit 13a generates the equalizer-compensation-cancelled header sequence S302 in place of the phase-compensated header sequence S207.

As described above, the equalization processing circuit 13a according to the second embodiment generates the equalizer-compensation-cancelled header sequence S302 that have equivalent characteristics to those of the phase-compensated header sequence S207 without using the second delay buffer 25. Therefore, the equalization processing circuit 13a according to the second embodiment can obtain the same noise compression effect as a receiving device including the equalization processing circuit 13 according to the first embodiment, by a small number of circuit elements than in the transmitting and receiving device 1 according to the first embodiment.

Further, processing of the equalization processing circuit 13a according to the second embodiment can be also achieved by a program. In this case, the equalization processing circuit 13a is configured by an arithmetic processing unit that can execute a program, and a register, a memory, or the like is used as a circuit for holding a value, such as a delay buffer or a holding circuit, in the equalization processing circuit 13a. In this case, the equalization processing circuit 13a according to the second embodiment includes the first delay buffer 21 and the second delay buffer 25. The equalization processing circuit 13a performs an equalizing process of performing a distortion compensating process for the received signal sequence S202 and outputting the equalizer-compensated output sequence S203, a tracking process of compensating phase rotation of the equalizer-compensated output sequence S203 and outputting the sequence to be demodulated S104, a demodulation-object sequence holding process of temporarily holding the sequence to be demodulated S104 in the second delay buffer 25, an equalizer-compensation cancelling process of applying the first compensation coefficient H1 to a portion of the sequence to be demodulated S104, which corresponds to a header sequence, to generate a phase-compensated header sequence in which phase rotation of the header sequence has been canceled, a payload holding process of temporarily holding a payload sequence in the first delay buffer 21, and an input selecting process of selecting the received signal sequence S103 as an object of an equalizing process in a period from the first transmission-path estimating process to the third transmission-path estimating process and selecting the payload sequence S201 stored in the first delay buffer as the object of the equalizing process in the second propagation-path compensating process.

Third Embodiment

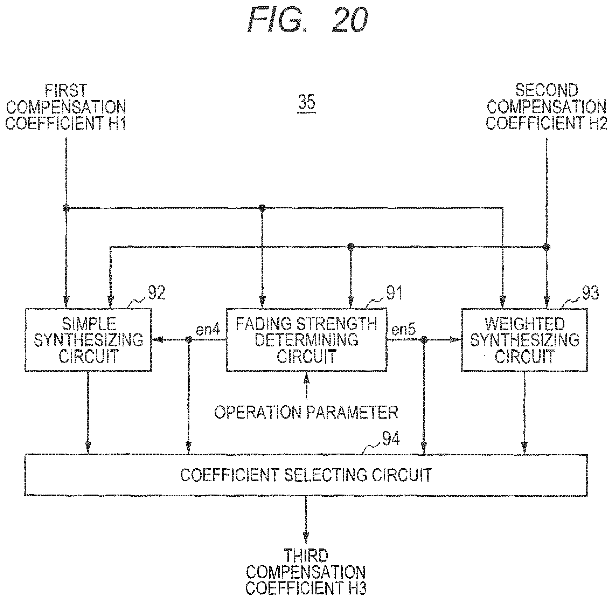

In the third embodiment, the synthesizing circuit 35 included in the equalizer 23 or the equalizer 81 is described. FIG. 20 is a block diagram of the synthesizing circuit 35 in an equalizer according to the third embodiment. As illustrated in FIG. 20, the synthesizing circuit 35 includes a fading-strength determining circuit 91, a simple synthesizing circuit 92, a weighted synthesizing circuit 93, and a coefficient selecting circuit 94.

The fading-strength determining circuit 91 determines the fading strength of the received signal RX based on the first compensation coefficient H1, the second compensation coefficient H2, and an operation parameter provided in advance. When the fading strength has been determined to be smaller than a preset threshold value, the fading-strength determining circuit 91 places an enable signal en4 in an enable state, synthesizes the first compensation coefficient H1 and the second compensation coefficient H2 with each other to generate the third compensation coefficient H3 by the simple synthesizing circuit 92, and causes the coefficient selecting circuit 94 to select the third compensation coefficient H3 generated by the simple synthesizing circuit 92. When the fading strength has been determined to be equal to or larger than the preset threshold value, the fading-strength determining circuit 91 places an enable signal en5 in an enable state, synthesizes the first compensation coefficient H1 and the second compensation coefficient H2 with each other to generate the third compensation coefficient H3 by the weighted synthesizing circuit 93, and causes the coefficient selecting circuit 94 to select the third compensation coefficient H3 generated by the weighted synthesizing circuit 93.

The simple synthesizing circuit 92 calculates an average value of the first compensation coefficient H1 and the second compensation coefficient H2 as the third compensation coefficient H3. The third compensation coefficient H3 calculated by the simple synthesizing circuit 92 is represented by Expression (5).

$$H3 = (H1 + H2)/2 \ \ldots \ (5)$$

The weighted synthesizing circuit 93 applies predetermined weights to the first compensation coefficient H1 and the second compensation coefficient H2 and calculates a weighted average value of these weighted compensation coefficients as the third compensation coefficient H3. Assuming that the weight applied to the first compensation coefficient H1 is w1 and the weight applied to the second compensation coefficient H2 is w2, the third compensation coefficient H3 generated by the weighted synthesizing circuit 93 is represented by Expression (6).

$$H3 = (w1 \times H1 + w2 \times H2)/(w1 + w2) \ \ldots \ (6)$$

The coefficient selecting circuit 94 selects the third compensation coefficient H3 generated based on the fading strength determined by the fading-strength determining circuit 91, from the output of the simple synthesizing circuit 92 and the output of the weighted synthesizing circuit 93, and outputs the selected third compensation coefficient H3 to the third coefficient holding circuit 36.

As described above, the synthesizing circuit 35 according to the third embodiment can switch a method of synthesizing the third compensation coefficient H3 in accordance with the fading strength. In a multipath fading environment, there is a trade-off relation that weighted synthesizing provides a better synthesizing result, while power consumption becomes larger. Therefore, as in the synthesizing circuit 35, the degree of multipath fading is determined, simple synthesizing is performed under a condition of weak fading, and weighted synthesizing is performed under a condition of strong fading. This makes it possible to balance the characteristics and the power consumption.

When the operation of the synthesizing circuit 35 is executed by a program, the equalization processing circuit 13 that executes an equalization processing program performs, in the third transmission-path estimating process, a fading-strength determining process of determining the fading strength of a received signal based on the first compensation coefficient H1, the second compensation coefficient H2, and an operation parameter provided in advance, a simple synthesizing process of calculating an average value of the first compensation coefficient H1 and the second compensation coefficient H2 as the third compensation coefficient H3 when the fading strength has been determined to be smaller than a preset threshold value in the fading-strength determining process, a weighted synthesizing process of applying predetermined weights to the first compensation coefficient H1 and the second compensation coefficient H2 and calculating a weighted average value of these weighted compensation coefficients as the third compensation coefficient when the fading strength has been determined to be equal to or larger than the preset threshold value in the fading-strength determining process, and a coefficient selecting process of selecting the third compensation coefficient H3 generated based on the fading strength determined in the fading-strength determining process from a calculation result of the simple synthesizing process and a calculation result of the weighted synthesizing process.

Fourth Embodiment

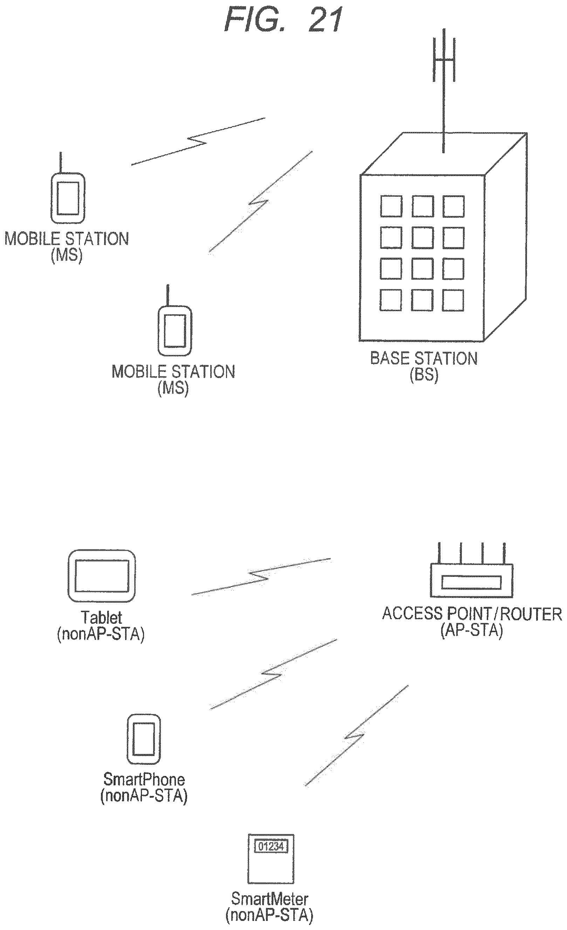

In the fourth embodiment, an example of a communication system using any of the received devices described in the first to third embodiments is described. FIG. 21 illustrates a communication system according to the fourth embodiment. An upper portion of FIG. 21 illustrates a mobile radio communication system, and a lower portion illustrates a semi-fixed radio system in which a positional relation between a mobile station and a base station is fixed or is almost unchanged, such as a wireless LAN, (hereinafter, simply referred to as a fixed radio system).

In a radio system, when the positional relation between the base station and the mobile station is not largely changed, deterioration of accuracy of a compensation coefficient by fading is small, and an influence of the fading on accuracy of estimation of propagation-path characteristics is small. Meanwhile, when the positional relation between the base station and the mobile station is not largely changed, thermal noise has a large influence on the accuracy of estimation of the propagation-path characteristics.

Therefore, when any of the receiving devices described in the first to third embodiments is used, it is possible to prevent deterioration of accuracy of estimation caused by thermal noise and to largely extend a communication distance from a base station, such as an access point router, to a mobile station especially in a fixed communication system.

In the above, the invention made by the inventors of the present application has been specifically described by way of the embodiments. However, it is naturally understood that the present invention is not limited to the aforementioned embodiments, and can be changed in various ways within the scope not departing from the gist thereof.

**Claims**

1.  A receiving device comprising:

    an equalization processing circuit that performs an equalization process for a received signal sequence generated from a received signal,
    wherein the received signal sequence includes a preamble sequence having a predetermined value, a header sequence that includes a random data sequence, and a payload sequence including data to be transmitted by the transmitting device to the receiving device,
    wherein the equalization processing circuit performs
    a first transmission-path estimating process of generating a first compensation coefficient indicating a propagation coefficient of a transmission path of the received signal,
    a second transmission-path estimating process of generating a second compensation coefficient from a header-replica sequence generated for the header sequence, and
    a third transmission-path estimating process of generating a third compensation coefficient by synthesizing the first compensation coefficient and the second compensation coefficient with each other.

2.  The receiving device according to claim 1,
    wherein the first compensation coefficient is generated based on the preamble sequence.

3.  The receiving device according to claim 1 or 2, further comprising:
    a demodulation processing circuit that demodulate a sequence to be demodulated and outputs a received data sequence; and

    a modulation processing circuit that modulate the received data sequence to generate a transmitted signal sequence,
    wherein the sequence to be demodulated is output from the equalization processing circuit.

4.  The receiving device according to one of claims 1 to 3,
    wherein the header-replica sequence is generated by performing demodulation and modulation for the header sequence included in a first equalizer-compensated output sequence in which distortion has been compensated based on the first compensation coefficient.

5.  The receiving device according to one of claims 1 to 4,
    wherein the equalization processing circuit performs a propagation-path compensating process of performing a distortion compensating process for the payload sequence included in the received signal sequence based on the third compensation coefficient.

6.  The receiving device according to one of claims 1 to 5, wherein the header-replica sequence is generated based on a header sequence that has been determined as including no error in the demodulation in the demodulation processing circuit.

7.  The receiving device according to one of claims 1 to 5, wherein the equalization processing circuit includes
    a first delay buffer that temporarily holds the payload sequence, an equalizer that performs the distortion compensating process for the received signal sequence and outputs an equalizer-compensated output sequence,
    a tracking processing circuit that compensates phase rotation of the equalizer-compensated output sequence and outputs the sequence to be demodulated,

a second delay buffer that temporarily holds phase amount information indicating magnitude of the phase rotation applied to the equalizer-compensated output sequence,

a third delay buffer that temporarily holds the header sequence,

a first phase compensating circuit that applies the phase amount information to the header sequence to generate a phase-compensated header sequence in which phase rotation of the header sequence has been compensated, and

an input selecting circuit that provides the received signal sequence to the equalizer in a period from the first transmission-path estimating process to the third transmission-path estimating process, and provides the payload sequence stored in the first delay buffer to the equalizer in the propagation-path compensating process.

8. The receiving device according to claim 7, wherein the equalizer includes

a preamble register that stores preamble information indicating the preamble sequence,

a first selecting circuit that selects and outputs the preamble sequence in the first transmission-path estimating process, and selects and outputs the phase-compensated header sequence in the second transmission-path estimating process,

a second selecting circuit that selects and outputs the preamble information in the first transmission-path estimating process, and selects and outputs the header-replica sequence included in the transmitted signal sequence output from the modulation processing circuit in the second transmission-path estimating process,

a propagation-path-characteristics estimating circuit that generates the first compensation coefficient based on the preamble sequence and the preamble information in the first transmission-path estimating process, and generates the second compensation coefficient based on the phase-compensated header sequence and the header-replica sequence in the second transmission-path estimating process,

a first coefficient holding circuit that holds the first compensation coefficient,

a second coefficient holding circuit that holds the second compensation coefficient,

a synthesizing circuit that synthesizes the first compensation coefficient and the second compensation coefficient with each other to generate the third compensation coefficient,

a third coefficient holding circuit that holds the third compensation coefficient,

a third selecting circuit that selects and outputs the first compensation coefficient until the third compensation coefficient is generated, and selects and outputs the third compensation coefficient after the third compensation coefficient is generated,

an inverse calculating circuit that calculates an inverse of a compensation coefficient output by the third selecting circuit, and

a propagation-path compensating circuit that performs the distortion compensating process for the received signal sequence by using the inverse of the compensation coefficient output from the inverse calculating unit, and outputs the equalizer-compensated output sequence.

9. The receiving device according to claim 8, wherein the synthesizing circuit includes

a fading-strength determining circuit that determines fading strength of the received signal based on the first compensation coefficient, the second compensation coefficient, and an operation parameter provided in advance,

a simple synthesizing circuit that calculates an average value of the first compensation coefficient and the second compensation coefficient as the third compensation coefficient when the fading strength has been determined to be smaller than a preset threshold value in the fading-strength determining circuit,

a weighted synthesizing circuit that applies predetermined weights to the first compensation coefficient and the second compensation coefficient and calculates a weighted average value of the weighted compensation coefficients as the third compensation coefficient when the fading strength has been determined to be equal to or larger than the preset threshold value in the fading-strength determining circuit, and

a coefficient selecting circuit that outputs the third compensation coefficient generated based on the fading strength determined by the fading-strength determining circuit, from an output of the simple synthesizing circuit and an output of the weighted synthesizing circuit, and outputs the selected output to the third coefficient holding circuit.

10. The receiving device according to one of claims 7 to 9, wherein the tracking processing circuit includes a pilot register storing therein pilot-signal information that is a reference for a delay rotation amount of the header sequence.

11. The receiving device according to claim 10, wherein the tracking processing circuit includes

a phase estimating circuit that estimates a phase rotation amount by comparing the pilot-signal information and a header sequence in the equalizer-compensated output sequence with each other, and generates the phase amount information indicating the magnitude of the phase rotation, and

a second phase compensating circuit that compensates phase rotation of the equalizer-compensated output sequence based on the phase amount information and outputs a signal obtained by compensation as the sequence to be demodulated.

12. The receiving device according to one of claims 5 to 11, wherein the equalization processing circuit includes a first delay buffer that temporarily holds the payload sequence, an equalizer that performs the distortion compensating process for the received signal sequence and outputs an equalizer-compensated output sequence, a tracking processing circuit that compensates phase rotation of the equalizer-compensated output sequence and outputs the sequence to be demodulated, a second delay buffer that temporarily holds the sequence to be demodulated, an equalizer-compensation canceling circuit that applies the first compensation coefficient to a portion of the sequence to be demodulated, which corresponds to the header sequence, to generate a phase-compensated header sequence in which phase rotation of the header sequence has been canceled, and an input selecting circuit that provides the received signal sequence to the equalizer in a period from the first transmission-path estimating process to the third transmission-path estimating process, and provides the payload sequence stored in the first delay buffer to the equalizer in the propagation-path compensating process.

13. The receiving device according to one of claims 5 to 12, wherein in a period after the first transmission-path estimating process before the third transmission-path estimating process, the demodulation processing circuit demodulates the sequence to be demodulated that includes the header sequence, and outputs a header sequence after being demodulated to the modulation processing circuit, and the modulation processing circuit performs modulation for the received header sequence after being demodulated and outputs the header-replica sequence.

14. The receiving device according to one of claims 5 to 12, wherein in a period after the third transmission-path estimating process, the demodulation processing circuit outputs the received data sequence generated by demodulating the sequence to be demodulated to a signal processing circuit in a later stage, and the modulation processing circuit modulates a transmitted data sequence output from the signal processing circuit to generate the transmitted signal sequence, and outputs the generated transmitted signal sequence to a transmission processing circuit provided in a later stage.

15. An equalization processing program causing an equalization processing circuit of a receiving device including the equalization processing circuit that performs an equalizing process for a received signal sequence generated from a received signal and outputs a sequence to be demodulated, a demodulation processing circuit that demodulates the sequence to be demodulated and outputs a received data sequence, and a modulation processing circuit that modulates the received data sequence to generate a transmitted signal sequence, to execute:

    a first transmission-path estimating process of generating a first compensation coefficient indicating a propagation coefficient of a transmission path of the received signal, based on a preamble sequence that is included in the received signal sequence and has a predetermined value,
    a first propagation-path compensating process of applying the first compensation coefficient to a header sequence included in the received signal sequence to generate a first equalizer-compensated output sequence in which distortion has been compensated,
    a second transmission-path estimating process of generating a second compensation coefficient from a header-replica sequence generated by performing demodulation and modulation for the header sequence included in the first equalizer-compensated output sequence,
    a third transmission-path estimating process of generating a third compensation coefficient by synthesizing the first compensation coefficient and the second compensation coefficient with each other, and
    a second propagation-path compensating process of performing a distortion compensating process for a payload sequence included in the received signal sequence based on the third compensation coefficient.

16. The equalization processing program according to claim 13, further causing to execute the process steps as carried out by the apparatus features as defined in one of claims 7, 9, 11, or 12.

17. A signal receiving method of a receiving device including an equalization processing circuit that performs an equalizing process for a received signal sequence generated from a received signal and outputs a sequence to be demodulated,
a demodulation processing circuit that demodulates the sequence to be demodulated and outputs a received data sequence, and
a modulation processing circuit that modulates the received data sequence to generate a transmitted signal sequence, the method comprising, in the equalization processing circuit:

performing a first transmission-path estimating process of generating a first compensation coefficient indicating a propagation coefficient of a transmission path of the received signal, based on a preamble sequence included in the received signal sequence and having a predetermined value;

a first propagation-path compensating process of applying the first compensation coefficient to a header sequence included in the received signal sequence to generate generating a first equalizer-compensated output sequence in which distortion has been compensated;

a second transmission-path estimating process of generating a second compensation coefficient from a header-replica sequence generated by performing demodulation and modulation for the header sequence included in the first equalizer-compensated output sequence;

a third transmission-path estimating process of generating a third compensation coefficient by synthesizing the first compensation coefficient and the second compensation coefficient with each other; and

a second propagation-path compensating process of performing a distortion compensating process for a payload sequence included in the received signal sequence based on the third compensation coefficient.

# FIG. 1

EXPLANATORY DIAGRAM OF INFLUENCE OF NOISE ON TRANSMISSION PATH

SIMPLE BLOCK DIAGRAM OF RECEIVING CIRCUIT

EXPLANATORY DIAGRAM OF FRAME FORMAT OF RECEIVED SIGNAL

## FIG. 2

## FIG. 3

# FIG. 4

23

HEADER
SEQUENCE S207
(PHASE COMPENSATED)

(RECEIVED SIGNAL
SEQUENCE)
PREAMBLE SEQUENCE
S103

30
PREAMBLE
REGISTER

TRANSMITTED SIGNAL
SEQUENCE S107
(HEADER REPLICA
SEQUENCE)

31a
| 0 | 1 |
|---|---|
sel1 → SELECTING CIRCUIT

31b
| 0 | 1 |
|---|---|
SELECTING CIRCUIT ← sel2

32
| a | b |
|---|---|
PROPAGATION-PATH CHARACTERISTIC
ESTIMATING CIRCUIT (a/b)

33
en1 → FIRST COEFFICIENT
HOLDING CIRCUIT
(H1)

34
SECOND COEFFICIENT
HOLDING CIRCUIT
(H2) ← en2

H1

H2

35
SYNTHESIZING CIRCUIT

H3

36
THIRD COEFFICIENT
HOLDING CIRCUIT
(H3) ← en3

H3

37
sel3 → | 0 | SELECTING CIRCUIT | 1 |

a

38
INVERSE CALCULATING
CIRCUIT (1/a)

(RECEIVED SIGNAL
SEQUENCE)
SEQUENCE TO BE
SUBJECTED TO
EQUALIZATION
S202

b

39
a → PROPAGATION-PATH
COMPENSATING CIRCUIT (a×b) → EQUALIZER-COMPENSATED
OUTPUT SEQUENCE
S203

# FIG. 5

<u>24</u>

PILOT-SIGNAL-INFORMATION HOLDING CIRCUIT (KNOWN INFORMATION) — 41

EQUALIZER-COMPENSATED OUTPUT SEQUENCE S203

PHASE ESTIMATING CIRCUIT — 42

PHASE AMOUNT INFORMATION S204

PHASE COMPENSATING CIRCUIT (EQUALIZER-COMPENSATED OUTPUT SEQUENCE) — 43

SEQUENCE TO BE DEMODULATED S104

# FIG. 6

<u>27</u>

DELAY HEADER SEQUENCE S205

PHASE AMOUNT INFORMATION S206

COMPLEX MULTIPLIER — 51

HEADER SEQUENCE S207 (PHASE COMPENSATED)

# FIG. 7

SEQUENCE TO BE DEMODULATED
S104

~14

| CONSTELLATION-DEMAPPING PROCESSING CIRCUIT | 61 |

| DE-INTERLEAVING CIRCUIT | 62 |

| VITERBI DECODING PROCESSING CIRCUIT | 63 |

| DESCRAMBLING CIRCUIT | 64 |

| CRC CHECK PROCESSING CIRCUIT | 65 |

| HEADER ANALYZING CIRCUIT | 66 |

RECEIVED DATA
S105

TRANSMITTED DATA
S106

~15

| HEADER-FRAME GENERATING CIRCUIT | 71 |

| CRC GENERATING CIRCUIT | 72 |

| SCRAMBLE SETTING CIRCUIT | 73 |

| CONVOLUTIONAL CODING CIRCUIT | 74 |

| INTERLEAVING PROCESSING CIRCUIT | 75 |

| CONSTELLATION-MAPPING PROCESSING CIRCUIT | 76 |

TRANSMITTED SIGNAL SEQUENCE S107
(INCLUDING RECEIVED HEADER REPLICA)

EP 3 506 579 A1

FIG. 8

| PREAMBLE | HEADER | PAYLOAD |
|---|---|---|

SYNTHESIS (H3)

| PROPAGATION-PATH ESTIMATING PROCESS | | PROPAGATION PATH ESTIMATION (H1) | PROPAGATION PATH COMPEN-SATION (H1) | | PROPAGATION PATH ESTIMATION (H2) | | PROPAGATION PATH COMPENSATION (H3) |

| REPLICA GENERATING PROCESS | | | DEMODULATION PROCESS | | HEADER REPLICA |

MODULATION PROCESS

PHASE COMPENSATED HEADER

sel1
sel2
sel3
en1
en2
en3

## FIG. 9

| PREAMBLE | HEADER | PAYLOAD |
|---|---|---|

| THIRD DELAY BUFFER | | WRITE | READ | |
|---|---|---|---|---|

PAYLOAD

| FIRST DELAY BUFFER | | WRITE | | READ |
|---|---|---|---|---|

PAYLOAD

| PROPAGATION-PATH ESTIMATING PROCESS | PROPAGATION PATH ESTIMATION (H1) | PROPAGATION PATH COMPENSATION (H1) | PROPAGATION PATH ESTIMATION (H2) | PROPAGATION PATH COMPENSATION (H3) |
|---|---|---|---|---|

MODULATION PROCESS

SYNTHESIS (H3)

| REPLICA GENERATING PROCESS | | DEMODULATION PROCESS | HEADER REPLICA |
|---|---|---|---|

PHASE AMOUNT

| SECOND DELAY BUFFER | | WRITE | READ |
|---|---|---|---|

HEADER

PHASE AMOUNT

PHASE COMPENSATED HEADER

EP 3 506 579 A1

FIG. 10

26

# FIG. 11

# FIG. 12

FIG. 13

# FIG. 14

81

HEADER
SEQUENCE S302
(EQUALIZER-
COMPENSATION
CANCELLED)

(RECEIVED SIGNAL
SEQUENCE)
PREAMBLE SEQUENCE
S103

PREAMBLE
REGISTER

~30

TRANSMITTED SIGNAL
SEQUENCE S107
(HEADER REPLICA
SEQUENCE)

~31a

```
        0          1
sel1   SELECTING CIRCUIT
```

~31b

```
        0          1
       SELECTING CIRCUIT    sel2
```

~32

```
       a                    b
   PROPAGATION-PATH CHARACTERISTIC
      ESTIMATING CIRCUIT (a/b)
```

33 ~

en1 → FIRST COEFFICIENT
HOLDING CIRCUIT
(H1)

SECOND COEFFICIENT
HOLDING CIRCUIT
(H2)  ~34  en2

(FIRST COMPENSATION
COEFFICIENT H1)
FIRST COEFFICIENT
SIGNAL S301

H1          H2

~35

SYNTHESIZING CIRCUIT

H3

~36

THIRD COEFFICIENT
HOLDING CIRCUIT
(H3)          en3

H3

~37

```
       0     SELECTING CIRCUIT    1
sel3
```

~38

```
              a
      INVERSE CALCULATING
         CIRCUIT (1/a)
```

(RECEIVED SIGNAL
SEQUENCE)
SEQUENCE TO BE
SUBJECTED TO
EQUALIZATION
S202

~39

```
              b
a   PROPAGATION-PATH
    COMPENSATING CIRCUIT (a×b)
```

EQUALIZER-COMPENSATED
OUTPUT SEQUENCE
S203

30

## FIG. 15

82

## FIG. 16

83

FIG. 17

*FIG. 18*

| PREAMBLE | HEADER | PAYLOAD |
|----------|--------|---------|

PAYLOAD

WRITE

| FIRST DELAY BUFFER | | |

READ

PAYLOAD

| PROPAGATION-PATH ESTIMATING PROCESS | PROPAGATION PATH ESTIMATION (H1) | PROPAGATION PATH COMPEN-SATION (H1) | PROPAGATION PATH ESTIMATION (H2) | PROPAGATION PATH COMPENSATION (H3) |
|---|---|---|---|---|

MODULATION PROCESS

SYNTHESIS (H3)

| REPLICA GENERATING PROCESS | | DEMODULATION PROCESS | HEADER REPLICA |
|---|---|---|---|

| SECOND DELAY BUFFER | | WRITE | READ |
|---|---|---|---|

TRACKING OUTPUT

| EQUALIZER-COMPENSATION CANCELLING |
|---|

FIG. 19

## FIG. 20

FIRST COMPENSATION COEFFICIENT H1

35

SECOND COMPENSATION COEFFICIENT H2

**SIMPLE SYNTHESIZING CIRCUIT** 92

**FADING STRENGTH DETERMINING CIRCUIT** 91

**WEIGHTED SYNTHESIZING CIRCUIT** 93

en4

en5

OPERATION PARAMETER

**COEFFICIENT SELECTING CIRCUIT** 94

THIRD COMPENSATION COEFFICIENT H3

# FIG. 21

MOBILE STATION
(MS)

MOBILE STATION
(MS)

BASE STATION
(BS)

Tablet
(nonAP-STA)

ACCESS POINT / ROUTER
(AP-STA)

SmartPhone
(nonAP-STA)

01234

SmartMeter
(nonAP-STA)

Europäisches
Patentamt

European
Patent Office

Office européen
des brevets

**EUROPEAN SEARCH REPORT**

Application Number

EP 18 21 4988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2002/126774 A1 (HARADA HIROSHI [JP] ET AL) 12 September 2002 (2002-09-12)<br>* paragraphs [0133] - [0161]; figures 1, 2 * | 1-17<br>9 | INV.<br>H04L25/02<br>H04L25/03 |
| X<br>Y | US 2004/184561 A1 (HARADA HIROSHI [JP] ET AL) 23 September 2004 (2004-09-23)<br>* paragraphs [0052] - [0055], [0103] - [0107], [0113] - [0121]; figures 1, 3 * | 1,15,17<br>9 | |

TECHNICAL FIELDS
SEARCHED      (IPC)

H04L

The present search report has been drawn up for all claims

| Place of search | Date of completion of the search | Examiner |
|---|---|---|
| Munich | 16 May 2019 | Vucic, Jelena |

## ANNEX TO THE EUROPEAN SEARCH REPORT
## ON EUROPEAN PATENT APPLICATION NO.

EP 18 21 4988

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2019

| Patent document cited in search report | | Publication date | Patent family member(s) | | Publication date |
|---|---|---|---|---|---|
| US 2002126774 | A1 | 12-09-2002 | JP | 3794622 B2 | 05-07-2006 |
| | | | JP | 2002271293 A | 20-09-2002 |
| | | | US | 2002126774 A1 | 12-09-2002 |
| US 2004184561 | A1 | 23-09-2004 | JP | 4302410 B2 | 29-07-2009 |
| | | | JP | 2004266417 A | 24-09-2004 |
| | | | US | 2004184561 A1 | 23-09-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017249362 A

- JP 3794622 B